(19) Europäisches Patentamt
European Patent Office
Office européen des brevets

(11) **EP 2 855 159 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**15.09.2021 Patentblatt 2021/37**

(45) Hinweis auf die Patenterteilung:
**03.07.2019 Patentblatt 2019/27**

(21) Anmeldenummer: **13721324.5**

(22) Anmeldetag: **30.04.2013**

(51) Int Cl.:
**B41J 3/407** (2006.01)     **B65B 61/26** (2006.01)
**G01N 21/90** (2006.01)     **B65D 1/02** (2006.01)

(86) Internationale Anmeldenummer:
**PCT/EP2013/058993**

(87) Internationale Veröffentlichungsnummer:
**WO 2013/178418 (05.12.2013 Gazette 2013/49)**

(54) **VERFAHREN UND VORRICHTUNG ZUR KONTROLLE BZW. KORREKTUR EINES DIREKTDRUCKS AUF BEHÄLTERN MIT RELIEFARTIGER OBERFLÄCHENKONTUR**

METHOD AND DEVICE FOR INSPECTING OR CORRECTING A DIRECT PRINT ON CONTAINERS COMPRISING A RELIEF SURFACE CONTOUR

PROCÉDÉ ET DISPOSITIF DE CONTRÔLE ET DE CORRECTION D'UNE IMPRESSION DIRECTE SUR DES CONTENANTS À CONTOUR SUPERFICIEL EN RELIEF

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.06.2012 DE 102012209305**

(43) Veröffentlichungstag der Anmeldung:
**08.04.2015 Patentblatt 2015/15**

(73) Patentinhaber: **Krones AG**
**93073 Neutraubling (DE)**

(72) Erfinder:
• **LINDNER, Peter**
**93073 Neutraubling (DE)**
• **WINZINGER, Frank**
**93073 Neutraubling (DE)**
• **GROSCH, Sabine**
**93073 Neutraubling (DE)**

(74) Vertreter: **Grünecker Patent- und Rechtsanwälte PartG mbB**
**Leopoldstraße 4**
**80802 München (DE)**

(56) Entgegenhaltungen:
EP-A2- 2 213 462         EP-B1- 2 755 894
WO-A1-2010/034375        WO-A2-03/106177
DE-A1- 10 327 628        DE-A1-102009 033 810
DE-B3-102006 061 893     JP-A- 2007 008 110
JP-A- 2008 089 379       JP-A- 2010 126 210
US-A1- 2005 195 229      US-A1- 2009 169 719
US-A1- 2009 205 516      US-A1- 2010 281 833
US-A1- 2011 132 916      US-A1- 2011 132 916

**Beschreibung**

Die Erfindung betrifft ein Verfahren und eine Vorrichtung zur Kontrolle bzw. Korrektur eines Direktdrucks auf Behältern mit reliefartiger Oberflächenkontur mit den Merkmalen des Oberbegriffs von Patentanspruch 1 bzw. 7.

Es ist bekannt, Verpackungsbehälter für Produkte, wie beispielsweise Getränke, Hygieneartikel und dergleichen, zugunsten einer hochwertigen Produktpräsentation und/oder einer verbesserten Handhabung im seitlichen Wandbereich mit reliefartigen Oberflächenkonturen zu versehen. Dies kann insbesondere bei Kunststoffbehältern zur Versteifung der Behälterwand sowie zu einer Aufwertung des Erscheinungsbilds und der Haptik des Behälters beitragen. In der Regel lässt sich somit durch eine reliefartige Oberflächenkontur, beispielsweise eine ornamentale Struktur, ein Mehrwert des Behälters erzielen.

Ferner werden Behälter bekanntermaßen zum Zwecke der Etikettierung und/oder Verzierung bedruckt, beispielsweise mit Schriftzeichen, Logos, Mustern und Farbverläufen. Hierzu beschreibt beispielsweise die WO 03/002349 A2 ein Verfahren zum Tintenstrahldruck auf im Wesentlichen zylindrische Behälterseitenwände. Ebenso sind Verfahren bekannt, nach denen die reliefartige Oberflächenkontur eines Behälters mit einem Direktdruckverfahren bedruckt wird. Dabei werden beispielsweise die reliefartigen Oberflächenkonturen, welche von der zylindrischen Form der Behälterseitenwände abweichen, mit einem Tintenstrahldruck bedruckt. Insbesondere werden hierbei die zur zylindrischen Form schrägen Oberflächenpartien mit dem Direktdruck versehen.

Nachteilig dabei ist, dass bereits kleine Lageveränderungen des Behälters gegenüber dem Druckkopf zu einer deutlichen Verschlechterung des Druckergebnisses führen. Beispielsweise kommt es bei einer Verschiebung des Direktdrucks gegenüber der reliefartigen Oberflächenkontur zu einer Art Doppelbild. Dadurch werden der Wert des Behälters und somit auch der Wert des darin enthaltenen Produkts gemindert.

Die WO 2010/034375 A1 offenbart eine Vorrichtung zum Aufbringen eines Mehrfachdrucks auf Flaschen, wobei nach dem Bedrucken ein Inspektionsmodul den Mehrfachdruck hinsichtlich eventueller Fehler überprüft. Allerdings ist die Vorrichtung weder zum Bedrucken noch zur Kontrolle eines auf eine reliefartige Oberflächenkontur aufgebrachten Direktdrucks geeignet.

Die WO 03/106177 offenbart eine Vorrichtung zur Oberflächenbearbeitung von rotationssymmetrischen Getränkedosen, die dabei auch bedruckt werden können. Mithilfe einer Inspektionseinheit werden die bearbeiteten Teile kontrolliert. Allerdings ist diese Vorrichtung ebenfalls nicht für das Bedrucken und die Kontrolle eines auf eine reliefartige Oberflächenkontur aufgebrachten Direktdrucks geeignet.

Die US 2009/0205516 A1 offenbart ein Verfahren und eine Vorrichtung zur umfänglichen Bedruckung von toleranzbehafteten, zylindrischen Behältern. Gemäß einem Ausführungsbeispiel kann der korrekte Sitz von auf den Behältern angebrachten Etiketten mit einer Inspektionsvorrichtung kontrolliert werden.

Die US 201/0281833 A1 offenbart ein Verfahren zum Aufbringen von permanenten und temporären Dekoranteilen auf Glasflaschen. Desweiteren wird ein Inspektionssystem zur Erkennung von Defekten des Dekors vorgeschlagen.

Die JP 2008-089379 A offenbart eine Druck- und Inspektionsvorrichtung, bei der auf Basis einer Schrifterkennung der Aufdruck von Getränkedosen oder PET-Flaschen inspiziert wird. US2011/0132916 A1 und JP2010-126210 offenbaren Verfahren, bei denen Behälter eine reliefartige Oberflächenkontur aufweisen, die mit einem Digitaldruckverfahren bedruckt werden.

Aufgabe der vorliegenden Erfindung ist es, Verfahren und Vorrichtungen bereitzustellen, welche eine Verminderung des Werts von Behältern durch eine ungenaue Bedruckung verhindert. Zur Lösung der Aufgabenstellung stellt die Erfindung ein Verfahren zur Kontrolle eines Direktdrucks auf Behältern mit den Merkmalen des Anspruchs 1 bereit. Vorteilhafte Ausführungsformen der Erfindung sind in den Unteransprüchen genannt.

Dadurch, dass der auf der reliefartigen Oberflächenstruktur aufgebrachte Direktdruck hinsichtlich seiner Qualität und/oder Lage mit einer Inspektionsvorrichtung kontrolliert wird, ist es möglich, die ungenau bedruckten Behälter bereits vor der Weiterverarbeitung in nachfolgenden Prozessschritten auszusortieren. Somit können derartig ungenau bedruckte Behälter besonders günstig aufbereitet werden und dem Produktionszyklus wieder zugeführt werden. Ebenso ist es möglich, aus dem Ergebnis durch die Kontrolle der Inspektionsvorrichtung Rückschlüsse auf die Kalibrierung der Direktdruckvorrichtung zu ziehen und somit diese entweder zu rekalibrieren oder eine Wartung der Direktdruckvorrichtung auszulösen. Somit wird verhindert, dass nachfolgende Behälter ungenau bedruckt werden und diese im Wert gemindert werden.

In die Behälter können Getränke, Hygieneartikel, Pasten, chemische, biologische und/oder pharmazeutische Produkte abgefüllt werden. Das Verfahren kann insbesondere in einer Getränkeverarbeitungsanlage angewendet werden. Die Behälter können insbesondere Kunststoffflaschen, Glasflaschen und/oder Dosen umfassen. Das Verfahren zur Kontrolle eines Direktdrucks auf Behältern mit reliefartiger Oberflächenkontur kann dafür bestimmt sein, einen kontinuierlichen Strom von Behältern zu kontrollieren.

Die reliefartige Oberflächenkontur kann eine dreidimensionale Struktur sein, die sich gegenüber einem umgebenden Wandabschnitt durch gezielt und/oder reproduzierbar herstellbare Erhebungen und/oder Vertiefungen abzeichnet. Derartige reliefartige Oberflächenkonturen umfassen vorzugsweise Konturen im makroskopischen Bereich, die sich sowohl fühlen lassen, als auch bei den für den Gebrauch oder den Verkauf der Behälter üblichen Betrachtungsabständen vom menschlichen Auge erkannt bzw. räumlich aufgelöst werden können.

Bei dem Direktdruckverfahren kann es sich um ein Tintenstrahldruckverfahren handeln. Insbesondere können bei dem Direktdruckverfahren Farben eingesetzt werden, welche mit Wärme oder Licht, insbesondere UV-Licht, ausgehärtet werden.

Unter Qualität kann die Auflösung, die Farbdicke, die Tintendicke und/oder die Farbtreue des Direktdrucks verstanden werden.

Bei dem Verfahren werden Konturmerkmale der reliefartigen Oberflächenkontur und Bedruckungsmerkmale des Direktdrucks in der Inspektionsvorrichtung erfasst und korreliert. Dadurch, dass einerseits die Konturmerkmale der reliefartigen Oberflächenkontur und andererseits die Bedruckungsmerkmale des Direktdrucks erfasst werden, können diese mit einem Berechnungsverfahren zur Deckung gebracht und korreliert werden. Dadurch kann die Qualität und/oder Lage des aufgebrachten Direktdrucks auf der reliefartigen Oberflächenkontur genauer bestimmt werden. Die reliefartige Oberflächenkontur kann mittels eines Leuchtschirms mit Bereichen unterschiedlicher Leuchtdichte, mittels eines Projektors zur Projektion eines Musters und/oder einer Kamera erfasst werden. Ebenso kann die reliefartige Oberflächenkontur mit einem 3D-Messsensor zur Oberflächenvermessung erfasst werden, insbesondere mit einem Triangulationssensor. Der aufgebrachte Direktdruck kann mit einer Kamera erfasst werden. Mit Berechnungsverfahren können charakteristische Punkte und/oder Längen als Konturmerkmale der reliefartigen Oberflächenkontur und/oder als Bedruckungsmerkmale des Direktdrucks extrahiert werden, die insbesondere rotationsinvariant sind.

Die Behälter können vor der Bedruckung mit Haltevorrichtung lagefest verbunden werden, wobei insbesondere die Konturmerkmale der reliefartigen Oberflächenkontur vor der Bedruckung erfasst werden und die Bedruckungsmerkmale nach der Bedruckung erfasst werden. Durch diese Vorgehensweise können die Konturmerkmale der reliefartigen Oberflächenkontur an die Direktdruckvorrichtung weitergegeben und von dieser zur Ausrichtung der Druckköpfe relativ zum Behälter verwendet werden. Dadurch kann die Bedruckung auf den Behältern individuell genauer erfolgen. Dadurch, dass die Behälter mit Haltevorrichtungen lagefest verbunden sind, können die Bedruckungsmerkmale nach der Bedruckung erfasst werden, ohne die reliefartige Oberflächenkontur erneut zu erfassen.

Bei dem Verfahren kann außerdem der Direktdruck nach der Kontrolle mit einem Korrekturdruck korrigiert werden. Dadurch kann der Behälterausschuss verringert werden. Mit dem Korrekturdruck kann der Direktdruck derart korrigiert werden, dass das gewünschte Druckergebnis erzielt wird. Beispielsweise lassen sich damit durch den Ausfall einer Druckdüse nicht bedruckte Bereiche der reliefartigen Oberflächenkontur nachbessern.

Bei dem Verfahren kann außerdem zur Kalibrierung des Direktdrucks ein Korrektursignal von der Inspektionsvorrichtung zur Direktdruckvorrichtung übermittelt werden. Dadurch können systematische Druckfehler verbessert oder eliminiert werden. Beispielsweise kann so eine systematische Fehlausrichtung des Behälters gegenüber der Direktdruckvorrichtung erkannt und korrigiert werden. Dabei kann die statistische Auswertung von mehreren Inspektionsvorgängen erfolgen. Insbesondere kann ein Drehwinkel-Zeit-Profil einer Regelung zur Bewegung der Haltevorrichtungen mit dem Korrektursignal kalibriert werden. Ebenso kann auch eine Regelung von Druckdüsen bezüglich der Farbausstoßmenge, des Ausstoßzeitpunkts und/oder der Ausstoßtaktung mit dem Korrektursignal kalibriert werden. Zusätzlich kann eine Regelung bezüglich der Position und Ausrichtung der Druckköpfe mit dem Korrektursignal kalibriert werden, insbesondere um bis zu sechs Achsen.

Bei dem Verfahren kann ein weiteres Korrektursignal an eine der Inspektionsvorrichtung vorgeschaltete Behälterproduktionsmaschine, insbesondere an eine Rotationsstreckblasmaschine, zu deren Regelung übermittelt werden. Dadurch kann die Qualität der Behälter, insbesondere der Oberflächenkontur, verbessert werden. Dabei kann das weitere Korrektursignal insbesondere dazu eingesetzt werden, um Parameter der Behälterproduktionsmaschine zu kalibrieren. Die Parameter können insbesondere einen Vorblasdruck, einen Fertigblasdruck, eine Reckgeschwindigkeit, Start- und Endzeiten dieser Vorgänge, ein Temperaturprofil eines Vorformlings, eine Zustellkraft und/oder -druck eines Druckkissens sein. Die Parameter können dabei einer Blasstation individuell zugeordnet werden. Wenn beispielsweise erkannt wird, dass Konturen einer Flasche zu schwach ausgeprägt wurden, kann der Fertigblasdruck der Blasmaschine um einen vorbestimmten oder errechneten Wert angehoben werden. Wenn erkannt wird, dass die Trennnaht auf dem Behälter zu dick ist, kann der Druck im Druckkissen für die nächsten Behälter angehoben werden. Beispielsweise können auch bei bereichsweisen Wanddickenabeichungen der Behälter der Vorblasdruck oder ein Heizprofil verändert werden.

Bei dem Verfahren kann außerdem der Direktdruck sequenziell durch Druckköpfe mit unterschiedlichen Druckfarben erfolgen und zwischen wenigstens zwei Druckköpfen ein Zwischenergebnis des Direktdrucks kontrolliert werden und/oder nach dem Drucken aller Druckfarben das Gesamtergebnis kontrolliert werden. Dadurch kann verhindert werden, dass ein Behälter mit einer ersten Druckfarbe mit unzureichender Qualität bedruckt wird und in der Folge mit weiteren Druckfarben bedruckt wird. Somit wird der Farbverbrauch verringert.

Bei dem Verfahren können Teilflächen der reliefartigen Oberflächenkontur mit einer zur Grundform des Behälters schrägen Tangente senkrecht zu einer Inspektionsachse ausgerichtet werden. Dadurch können diese Teilflächen mit der Inspektionsvorrichtung besser erfasst werden. Die Inspektionsachse kann eine Kameraachse sein. Die Tangenten können die Grundform des Behälters zweifach schneiden. Ebenso kann eine derartige Ausrichtung auch beim Drucken selbst eingesetzt werden, um ein besseres Druckergebnis zu erreichen.

Mit dem Anspruch 7 stellt die Erfindung weiterhin eine Vorrichtung zur Durchführung eines Verfahrens nach Anspruch 1 für die Kontrolle eines Direktdrucks auf Behältern mit einer reliefartigen Oberflächenkontur bereit, gemäß dem die Vorrichtung eine Direktdruckvorrichtung zur mindestens teilweisen Bedruckung der reliefartigen Oberflächenkontur umfasst, dadurch gekennzeichnet, dass die Vorrichtung mindestens eine Inspektionsvorrichtung zur Überprüfung des Direktdrucks hinsichtlich seiner Qualität und/oder Lage aufweist.

Durch die Inspektionsvorrichtung zur Überprüfung des Direktdrucks hinsichtlich seiner Qualität und/oder Lage kann bewertet werden, ob der Direktdruck auf den Behältern die Wertigkeit vermindern würde. Bei einer schlechten Druckqualität kann somit der Behälter korrigiert oder aussortiert werden.

Die Inspektionsvorrichtung kann eine Erkennungseinheit für reliefartige Oberflächenkonturen und/oder eine Triangulationseinheit umfassen. Dadurch können 3D-Koordinaten der Oberflächenkontur erkannt oder bestimmt werden. Die Erkennungseinheit kann einen Leuchtschirm mit Bereichen unterschiedlicher Leuchtdichte, einen Projektor für die Projektion eines Musters, einen Laser und/oder eine Kamera umfassen. Die Inspektionsvorrichtung kann insbesondere eine Berechnungseinheit umfassen, welche dazu vorgesehen ist, die Konturmerkmale der reliefartigen Oberflächenkontur aus Messdaten zu ermitteln. Die Inspektionsvorrichtung kann auch ein Wanddickenmessgerät für die Behälterwandstärke umfassen.

Die Vorrichtung kann außerdem eine Inspektionsvorrichtung mit mindestens einer Kamera umfassen, wobei die Kamera insbesondere dazu geeignet ist, Bedruckungsmerkmale des Direktdrucks und/oder Konturmerkmale der reliefartigen Oberflächenstruktur zu erkennen. Dadurch können Bedruckungsmerkmale und/oder Konturmerkmale besonders einfach und berührungsfrei erkannt werden. Die Inspektionsvorrichtung kann eine Berechnungseinheit zur Bildverarbeitung umfassen. Die Berechnungseinheit zur Bildverarbeitung kann insbesondere dazu vorgesehen sein, charakteristische Punkte und/oder Längen der Konturmerkmale und/oder Bedruckungsmerkmale zu erkennen.

Bei der Vorrichtung können die Behälter, die Direktdruckvorrichtung und/oder die Inspektionsvorrichtung schwenkbar angeordnet sein. Dadurch kann die Direktdruckvorrichtung und/oder die Inspektionsvorrichtung in Bezug auf die Behälter und deren reliefartige Oberflächenkontur in einem optimalen Winkel ausgerichtet werden. Ein Schwenkmechanismus kann dazu vorgesehen sein, die Direktdruckvorrichtung und/oder die Inspektionsvorrichtung senkrecht zum lokalen Verlauf der reliefartigen Oberflächenkontur auszurichten. Dabei kann mindestens ein Motor in Verbindung mit einer Steuerung dazu vorgesehen sein, die Behälter, die Direktdruckvorrichtung und/oder die Inspektionsvorrichtung zu schwenken.

Ebenso kann die Vorrichtung eine Korrekturdruckvorrichtung umfassen, die insbesondere Korrekturdruckköpfe umfasst. Die Korrekturdruckköpfe können Antriebe zur Positionierung und/oder Ausrichtung umfassen, die insbesondere mit einer Steuerung verbunden sind. Die Antriebe können mindestens einen Elektromotor umfassen, die insbesondere dazu ausgebildet sind, die Korrekturdruckköpfe um mehrere Achsen zu verfahren. Die Steuerung kann mit der Inspektionsvorrichtung elektrisch verbunden sein.

Des Weiteren kann die Inspektionsvorrichtung mindestens eine Schichtdickenmessvorrichtung umfassen, die insbesondere dazu geeignet ist, die Dicke mindestens einer Farbschicht zu messen. Dadurch, dass die Dicke der Farbschicht gemessen wird, kann beurteilt werden, ob diese eine ausreichende Deckung aufweist. Ebenso kann damit beurteilt werden, ob die Direktdruckvorrichtung eine ausreichende Menge an Farbe auf den Behälter gedruckt hat. Die Schichtdickenmessvorrichtung kann ein magnetisch-induktives, ein Wirbelstrom oder ein Ultraschallverfahren zur Bestimmung der Farbschichtdicke verwenden.

Bei der Vorrichtung zur Kontrolle eines Direktdrucks können Haltevorrichtungen dazu vorgesehen sein, die Behälter lagefest aufzunehmen. Dadurch können Einheiten der Vorrichtung zur Kontrolle des Direktdrucks sowohl vor der Direktdruckvorrichtung angeordnet sein, als auch danach, wobei die genaue Lage des Behälters gegenüber den einzelnen Einheiten nur einmal eingemessen werden muss. Die Haltevorrichtungen können so ausgebildet sein, dass sie die Behälter am Boden und/oder am Hals aufnehmen.

Weiterhin wird als technologischer Hintergrund ein Verfahren zur Korrektur eines Direktdrucks auf Behältern mit reliefartiger Oberflächenkontur offenbart, gemäß dem die reliefartige Oberflächenkontur mindestens teilweise mit einer Direktdruckvorrichtung bedruckt wird, wobei der Direktdruck nach einer Kontrolle durch Aufbringen eines Korrekturdrucks und/oder durch Entfernen von auf dem Behälter aufgebrachter Druckfarbe korrigiert wird.

Dadurch, dass mit dem Verfahren die aufgebrachte Druckfarbe von Behältern entfernt werden kann, können nicht zu bedruckende Bereiche des Behälters korrigiert werden, die fälschlicherweise bedruckt wurden. Ebenso können auch bedruckte Bereich der Behälter mit einem Korrekturdruck korrigiert werden, wenn beispielsweise beim Bedrucken mit der Direktdruckvorrichtung nicht genügend Druckfarbe aufgebracht wurde. Darüber hinaus kann auch Druckfarbe bei nicht korrekt bedruckten Bereichen zunächst entfernt und dann ein Korrekturdruck aufgebracht werden. Durch die Korrektur müssen derartig ungenau bedruckte Behälter nicht entsorgt werden, sondern können nach der Korrektur dem Produktionszyklus wieder direkt zugeführt werden.

In die Behälter können Getränke, Hygieneartikel, Pasten, chemische, biologische und/oder pharmazeutische Produkte abgefüllt werden. Das Verfahren kann insbesondere in einer Getränkeverarbeitungsanlage angewendet werden. Die Behälter können insbesondere Kunststoffflaschen, Glasflaschen und/oder Dosen umfassen. Das Verfahren zur Korrektur eines Direktdrucks auf Behältern mit reliefartiger Oberflächenkontur kann dafür bestimmt sein, einen kontinuierlichen Strom von Behältern zu korrigieren.

Die reliefartige Oberflächenkontur kann eine dreidimensionale Struktur sein, die sich gegenüber einem umgebenden Wandabschnitt durch gezielt und/oder reproduzierbar herstellbare Erhebungen und/oder Vertiefungen abzeichnet. Derartige reliefartige Oberflächenkonturen umfassen vorzugsweise Konturen im makroskopischen Bereich, die sich sowohl fühlen lassen, als auch bei den für den Gebrauch oder den Verkauf der Behälter üblichen Betrachtungsabständen vom menschlichen Auge erkannt bzw. räumlich aufgelöst werden können.

Bei dem Direktdruckverfahren kann es sich um ein Tintenstrahldruckverfahren handeln. Insbesondere können bei dem Direktdruckverfahren Farben eingesetzt werden, welche mit Wärme oder Licht, insbesondere UV-Licht, ausgehärtet werden. Bei dem Verfahren kann das Aushärten der Druckfarben vor oder nach dem Korrekturdruck erfolgen.

Bei dem Verfahren kann der Korrekturdruck noch in derselben Behandlungsmaschine erfolgen.

Bei dem Verfahren kann der Korrekturdruck mit einer separaten Korrekturdruckvorrichtung oder der Direktdruckvorrichtung auf den Behälter aufgebracht werden. Bei der Korrekturdruckvorrichtung kann es sich um eine Tintenstrahldruckvorrichtung handeln. Insbesondere können bei dem Korrekturdruck Farben eingesetzt werden, welche mit Wärme oder Licht, insbesondere UV-Licht, ausgehärtet werden. Ebenso können die Behälter erneut zur Direktdruckvorrichtung transportiert werden, um damit den Korrekturdruck aufzubringen.

Bei dem Verfahren kann der Direktdruck bereichsweise ausgehärtet werden und nicht-ausgehärtete Bereiche korrigiert werden. Dabei kann die Druckfarbe nur in denjenigen Oberflächenbereichen des Behälters ausgehärtet werden, in denen keine Fehler bei der Kontrolle erkannt wurden. Dies kann mittels einer steuerbaren Abschirmung und/oder einer Drehpositionierung des Behälters auf einem steuerbaren Drehteller erfolgen.

Bei dem Verfahren kann die Druckfarbe mit Hilfe eines Lösungsmittels vom Behälter mindestens teilweise entfernt werden, insbesondere wenn Fehler bei der Kontrolle erkannt wurden. Dies kann insbesondere mittels motorisch verstellbarer Düsen erfolgen, welche den Behälter mit dem Lösungsmittel beaufschlagen. Die Entfernung der Druckfarbe kann insbesondere in denjenigen Oberflächenbereichen erfolgen, bei denen die Druckfarbe nicht ausgehärtet wurde. Dadurch lässt sich die Farbe vom Behälter leichter ablösen. Ebenso kann die Druckfarbe von Behältern komplett entfernt werden.

Weiterhin wird als technologischer Hintergrund eine Vorrichtung zur Durchführung des Verfahrens zur Korrektur eines Direktdrucks auf Behältern mit einer reliefartigen Oberflächenkontur offenbart, gemäß dem die Vorrichtung eine Direktdruckvorrichtung zur mindestens teilweisen Bedruckung der reliefartigen Oberflächenkontur umfasst, dadurch gekennzeichnet, dass die Vorrichtung eine Korrekturvorrichtung umfasst, die dazu ausgebildet ist, den Direktdruck nach einer Kontrolle zu korrigieren. Dadurch, dass die Vorrichtung eine Korrekturvorrichtung umfasst, können die Behälter nach dem Bedrucken mit der Direktdruckvorrichtung bezüglich des Direktdrucks korrigiert werden und müssen nicht als Ausschuss recycelt oder entsorgt werden. Vielmehr ist es mit der Korrekturvorrichtung möglich, eine ungenaue Bedruckung so zu korrigieren, dass die Qualität des Direktdrucks den Anforderungen an die Qualität entspricht. Somit wird der Wert des Behälters und damit des enthaltenen Produkts nicht durch eine ungenaue Bedruckung gemindert.

Die Korrekturvorrichtung kann die Direktdruckvorrichtung, eine Korrekturdruckvorrichtung und/oder eine Vorrichtung zum Entfernen von auf dem Behälter aufgebrachter Druckfarbe sein. Dadurch ist es möglich den Direktruck teilweise oder komplett vom Behälter zu entfernen und/oder zusätzliche Druckfarbe auf dem Behälter aufzubringen. Beispielsweise können unbeabsichtigte Farbspritzer von einem transparenten Behälter entfernt werden bzw. bei einem nicht-transparenten Behälter mit der Behälterfarbe überdruckt werden. Ebenso können Bereiche überdruckt werden, die noch keine ausreichende Farbabdeckung aufweisen. Die Direktdruckvorrichtung und/oder die Korrekturdruckvorrichtung kann dazu ausgebildet sein, einen Korrekturdruck aufzubringen. Die Vorrichtung zum Entfernen von auf dem Behälter aufgebrachter Druckfarbe kann Düsen umfassen, die zum Aufbringen eines Lösungsmittels auf den Behälter ausgebildet sind. Die Düsen können motorisch verstellbar sein.

Die Vorrichtung kann eine Transportweiche umfassen. Die Transportweiche kann dazu ausgebildet sein, einen Behälterstrom zwischen zwei Transportpfaden umzuschalten. Insbesondere kann das Umschalten der Transportweiche abhängig vom Ergebnis der Kontrolle erfolgen. Dadurch kann ein Behälter mit einer ungenügenden Druckqualität aus einem normalen Behälterstrom ausgeschleust werden und entlang der Korrekturvorrichtung geführt werden. Dadurch wird der normale Behälterstrom während der Korrektur eines Behälters nicht unterbrochen. Alternativ kann ein Behälter mit einer ungenügenden Druckqualität mit der Transportweiche aus dem normalen Behälterstrom ausgeschleust und zum Aufbringen des Korrekturdrucks zur Direktdruckvorrichtung zurückgeführt werden. Insbesondere kann ein Behälter nach der Korrektur mit einer weiteren Transportweiche in den normalen Behälterstrom wieder eingeschleust werden. Die Transportweiche kann ein ansteuerbarer Verteilerstern sein.

Die Vorrichtung kann ein Karussell mit einer ungeraden Anzahl von Behälterhalterungen aufweisen. Insbesondere kann an einem Einlauf des Karussells nur jede zweite Behälterhalterung mit einem Behälter beschickt werden und an einem Auslauf des Karussells die Behälter nur jeder anderen zweiten Behälterhalterung entnommen werden. Insbesondere kann sich ein erster Transportpfad im Karussell nach dem Einlauf mit einem zweiten Transportpfad im Karussell vor dem Auslauf überlappen. Somit ist es möglich, dass ein Behälter den Überlappbereich zweimal durchläuft. In dem Überlappbereich kann ein Behälter bei einem ersten Vorbeilauf mit der Direktdruckvorrichtung bedruckt werden und beim zweiten Vorbeilauf mit der selben Direktdruckvorrichtung korrigiert und/oder ausgehärtet werden. Ebenso kann eine Kontrolle des Direktdrucks beim ersten Vorbeilauf, beim zweiten Vorbeilauf oder dazwischen erfolgen.

Weitere Merkmale und Vorteile der Erfindung werden nachfolgend anhand der in den Figuren dargestellten Ausführungsbeispiele erläutert. Dabei zeigt

Fig. 1 ein Flussdiagramm eines erfindungsgemäßen Verfahrens zur Kontrolle des Direktdrucks auf Behältern mit reliefartiger Oberflächenkontur;

Fig. 2 eine Darstellung eines beispielhaften Behälters, welcher mit dem erfindungsgemäßen Verfahren aus Fig. 1 kontrolliert wird;

Fig. 3 eine Darstellung einer erfindungsgemäßen Vorrichtung zur Kontrolle bzw. Korrektur des Direktdrucks auf Behältern mit reliefartiger Oberflächenkontur in einer Draufsicht;

Fig. 4 eine Darstellung einer weiteren erfindungsgemäßen Vorrichtung in einer Draufsicht;

Fig. 5 eine Darstellung einer weiteren erfindungsgemäßen Vorrichtung in einer Draufsicht;

Fig. 6a - 6b eine Darstellung der Orientierung der Druckvorrichtung und der Inspektionsvorrichtung gegenüber dem Behälter in einer Draufsicht;

Fig. 7a - 7c Darstellungen von weiteren Orientierungen der Direktdruckvorrichtung und der Inspektionsvorrichtung gegenüber dem Behälter in einer Draufsicht;

Fig. 8 Darstellung der Orientierung der Inspektionsvorrichtung in Bezug auf die reliefartige Oberflächenkontur in einer Draufsicht; und

Fig. 9 eine Darstellung einer erfindungsgemäßen Vorrichtung zur Kontrolle bzw. Korrektur eines Direktdrucks auf Behältern mit reliefartiger Oberflächenkontur in einer Draufsicht.

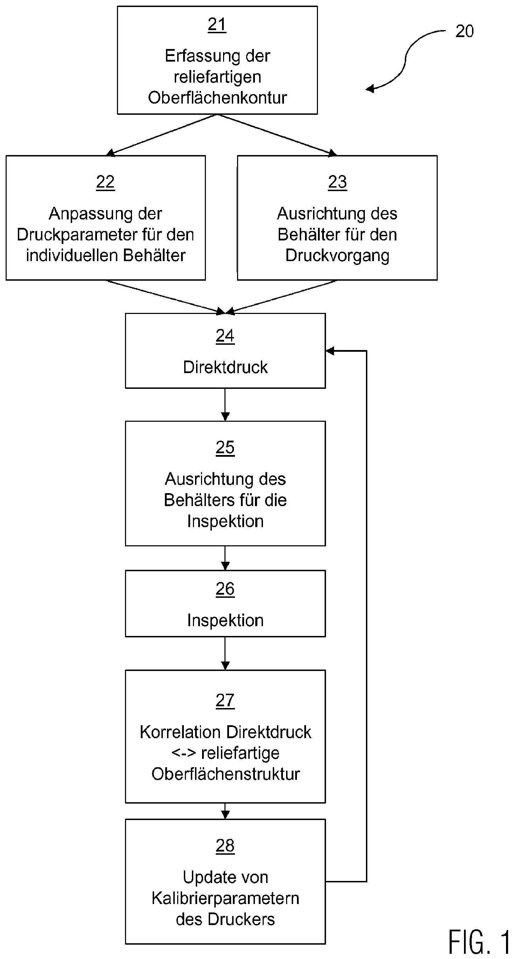

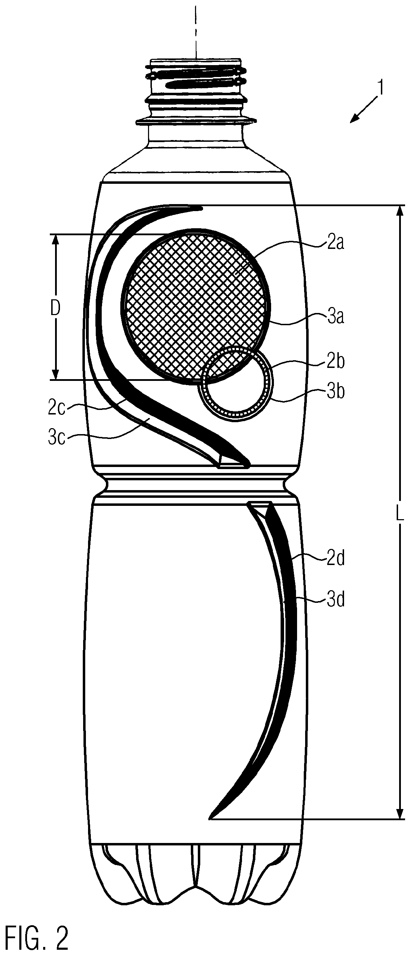

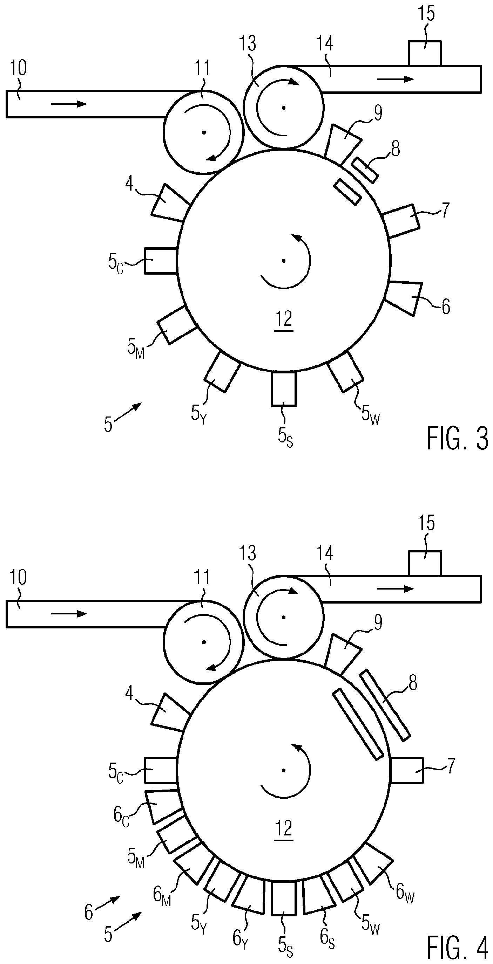

Die Fig. 1 zeigt ein Flussdiagramm eines erfindungsgemäßen Verfahrens 20 zur Kontrolle des Direktdrucks 2 auf Behältern 1 mit reliefartiger Oberflächenkontur 3. Das Verfahren 20 wird in Zusammenhang mit dem in Fig. 2 dargestellten Behälter 1 und der erfindungsgemäßen Vorrichtung in Figur 3 beschrieben, ist jedoch nicht auf diese beschränkt.

Das Verfahren 20 beginnt zunächst mit dem Prozessschritt 21 zur Erfassung der reliefartigen Oberflächenkontur 3. Das Messverfahren wird weiter unten in der Beschreibung von Fig. 3 genauer erläutert. Mit einer Erkennungseinheit 4 können dabei entsprechende Konturmerkmale der reliefartigen Oberflächenkontur 3 erfasst werden, wobei einerseits die genaue Lage des Behälters 1 erfasst werden kann, als auch die tatsächliche Form der reliefartigen Oberflächenkontur 3.

In einem weiteren Prozessschritt 22 können Druckparameter einer Direktdruckvorrichtung 5 für jeden Behälter 1 mit den Ergebnissen des Prozessschritts 21 angepasst werden. Somit ist es noch besser möglich, einen genauen Direktdruck zu realisieren, da Abweichungen von der Soll-Form der reliefartigen Oberflächenkontur 3 beim Druck miteinbezogen werden können.

Parallel dazu können in einem Prozessschritt 23 die Behälter 1 für den Druckvorgang 24 ausgerichtet werden. Dabei sind die Behälter 1 mit Haltevorrichtungen versehen, in denen die Behälterlager fest aufgenommen sind. Somit verlieren die Behälter 1 ihre Orientierung nicht gegenüber der Direktdruckvorrichtung 5 und der Inspektionsvorrichtung 4, 6, 9.

In Prozessschritt 24 werden die Behälter 1 mit einem Direktdruck 2 versehen, der aus fünf Farben besteht. Hierbei werden die Behälter nacheinander mit den Farben Cyan, Magenta, Gelb, Schwarz und Weiß bedruckt. Die Druckköpfe $5_C$, $5_M$, $5_Y$, $5_S$, $5_W$ arbeiten dabei nach dem Tintenstrahlprinzip. Die Farben können mit den UV-Lampen 8 schnell und ohne Verlaufen ausgehärtet werden. Somit weist der Behälter 1 auf der reliefartigen Oberflächenkontur 3 einen Direktdruck 2 auf.

Da die Behälter 1 mit Haltevorrichtungen lagefest verbunden sind, erfolgt in einem Prozessschritt 25 eine Drehung und damit Ausrichtung des Behälters 1 für die Inspektion. Falls die Behälter 1 nicht mit Haltevorrichtungen fest verbunden sind, können diese alternativ mit Hilfe einer Kamera durch die Erfassung von definierten Konturmerkmalen ausgerichtet werden.

Während der Inspektion 26 wird jeder Behälter 1 an einem Kamerasystem vorbeigeführt, bei dem der Behälter 1 mit möglichst gleichmäßigem Licht beleuchtet wird und so der Direktdruck in einem Bild erfasst wird. Mit einem Berechnungsverfahren werden anschließend aus dem Bild entsprechende Bedruckungsmerkmale des Direktdrucks 2 analysiert und erfasst. Diese Bedruckungsmerkmale werden in einem weiteren Prozessschritt 27 mit den Konturmerkmalen der reliefartigen Oberflächenkontur 3 korreliert. Anschließend kann mit einem Bewertungsverfahren entschieden werden, ob die Qualität und/oder die Lage des aufgebrachten Direktdrucks 2 auf der reliefartigen Oberflächenkontur 3 einem vorgegebenen Qualitätsstandard entspricht.

Falls die Qualität und/oder die Lage des aufgebrachten Direktdrucks 2 unterhalb des vorgegebenen Standards liegt, kann der betroffene Behälter aussortiert werden und zudem können mit dem Prozessschritt 28 die Kalibrierparameter der Druckvorrichtung 5 so angepasst werden, dass nachfolgende Behälter 1 korrekt bedruckt werden. Ebenso kann eine Wartung und/oder Reinigung der Druckvorrichtung 5 ausgelöst werden.

Durch das in Fig. 1 dargestellte Verfahren ist es somit möglich, die Qualität des Direktdrucks 2 und dessen Lage auf der reliefartigen Oberflächenkontur 3 rechnerisch zu beurteilen und anschließend nur die Behälter 1 weiter zu verarbeiten, die den Qualitätsstandard nicht unterschreiten. Somit wird verhindert, dass der Wert der Behälter gemindert wird.

Fig. 2 zeigt eine Darstellung eines beispielhaften Behälters, welcher mit dem erfindungsgemäßen Verfahren aus Fig. 1 kontrolliert wird.

Zu sehen ist ein Behälter 1 aus durchsichtigem Kunststoff, beispielsweise PET, der eine zylindrische Grundform mit einer Taille aufweist. Zusätzlich weist der Behälter 1 verschiedene Bereiche auf, die unterschiedliche reliefartige Oberflächenkonturen 3a - 3d haben. Hierbei ist zu sehen, dass in den Bereichen 2a und 2b die gesamte reliefartige Oberflächenkontur 3a und 3b mit Farbe bedruckt ist, wobei der Direktdruck 2a und 2b jeweils eine andere Druckfarbe aufweist. In den Bereichen 3c und 3d der Oberflächenkontur ist lediglich eine Seite der Einkerbung mit einem Direktdruck 2c und 2d mit einer Farbe bedruckt.

Ebenso sind in Fig. 2 die charakteristischen Längen L und D gezeigt, die sowohl als Bedruckungs- als auch Konturmerkmale herangezogen werden können.

Fig. 3 zeigt eine Darstellung einer erfindungsgemäßen Vorrichtung zur Kontrolle bzw. Korrektur des Direktdrucks 2 auf Behältern 1 mit reliefartiger Oberflächenkontur 3 in einer Draufsicht. Zu sehen ist eine Zuführung 10, mit der Behälter 1 (hier nicht dargestellt) über einen Umlenkstern 11 einem Karussell 12 zugeführt werden. Dabei werden die Behälter 1 während des Transports im Karussell 12 mit einem Direktdruck 2 versehen und mit einer Inspektionsvorrichtung 4, 6, 9 kontrolliert. Anschließend werden die Behälter 1 über einen Umlenkstern 13 und eine Abführung 14 weiteren Verarbeitungsstationen (hier nicht dargestellt) zugeführt. Dabei befindet sich im Bereich der Abführung 14 ein Auswerfer 15, um die Behälter 1 mit einer geminderten Qualität aus dem Verarbeitungsprozess zu entfernen oder für einen Korrekturdruck oder erneuten Druck in die selbe Maschine 5 zurückzuführen. Die Druckvorrichtung arbeitet insbesondere taktweise, es ist aber auch denkbar, sie kontinuierlich arbeiten zu lassen, wobei die Druckköpfe zumindest bereichsweise mit dem Behälter mitgeführt werden.

Zunächst werden die Behälter 1 nach dem Umlenkstern 11 im Karussell 12 von Haltevorrichtungen (hier nicht dargestellt) lagefest aufgenommen. Somit können sich die Behälter 1 gegenüber dem Karussell 12 nur in definierten Positionen befinden. Dabei sind die Haltevorrichtungen so ausgeführt, dass sie sich um ihre eigene Achse mit den Behältern 1 drehen können, um eine Bedruckung entlang des vollen Behälterumfangs und eine entsprechende Inspektion zu ermöglichen. Die Behälter 1 werden dabei an einer Erkennungseinheit 4 für reliefartige Oberflächenkonturen 3 vorbeigeführt. Hierbei befindet sich innerhalb der Erkennungseinheit 4 ein Leuchtschirm mit streifenartigen Strukturen, die längs der Behälterachse orientiert sind. Das Lichtmuster spiegelt sich dabei über einen Lichtreflex an der Behälteroberfläche und wird von einer Kamera aufgenommen. In dem Kamerabild sind somit der Behälter 1 und der Lichtreflex mit einem entsprechend verzerrten Streifenmuster sichtbar. Das Streifenmuster wird dabei einerseits von der zylindrischen Grundform der Behälteroberfläche verzerrt und andererseits von der reliefartigen Oberflächenkontur 3. Insbesondere ist das reflektierte Lichtmuster an den Flanken der reliefartigen Oberflächenkontur 3 besonders stark verzerrt. Mit der Erkennungseinheit 4 kann somit die genaue Lage des Behälters 1 bezüglich der Haltevorrichtung ermittelt werden und zusätzlich Fehler in der reliefartigen Oberflächenkontur 3.

Die von der Erkennungseinheit 4 gewonnenen Daten werden an die Druckvorrichtung 5 weitergegeben, um eine möglichst genaue Bedruckung des Behälters 1 zu erreichen. In der Druckvorrichtung 5 wird zunächst von dem Druckkopf $5_C$ die Farbe Cyan auf den Behälter 1 gedruckt und über die folgenden Druckköpfe $5_M$, $5_Y$, $5_S$, $5_W$ die Farben Magenta, Gelb, Schwarz und Weiß. Die Druckvorrichtung 5 basiert dabei auf dem Tintenstrahlprinzip.

Die Inspektionsvorrichtung umfasst eine Kamera 6, mit der ein Farbbild des Direktdrucks 2 nach dem Druckvorgang aufgenommen wird. Durch eine Korrelation werden die Konturmerkmale der reliefartigen Oberflächenkontur 3 mit dem Farbbild des Direktdrucks 2 überlagert. Somit ist eine genaue Analyse der Bedruckungsmerkmale des Direktdrucks 2 in Bezug auf die reliefartige Oberflächenkontur 3 möglich. Hierbei werden entsprechende Schwellwerte dazu benutzt, um die Qualität und/oder die Lage des Direktdrucks 2 auf der reliefartigen Oberflächenkontur 3 zu bewerten. Durch die Bewertung erfolgt einerseits eine Rekalibrierung der Druckparameter und andererseits eine Entscheidung, ob der betroffene Behälter 1 einen Korrekturdruck in der Korrekturdruckvorrichtung 7 erhält, oder ob dieser im späteren Verlauf am Auswurf 15 ausgeworfen wird. Die Korrekturdruckvorrichtung 7 weist dabei Druckdüsen mit allen Farben auf.

Im weiteren Verlauf des Karussells 12 werden die Farben mit einer UV-Lampe 8 ausgehärtet, insbesondere falls die Qualität und die Lage des Direktdrucks 2 dem Qualitätsstandard entsprechen. Dies hat zum Vorteil, dass die Farben nicht durch eine langwierige Trocknungsprozedur verlaufen können. Anschließend wird das Gesamtdruckergebnis in der Einheit 9 der Inspektionsvorrichtung hinsichtlich seiner Qualität und/oder Lage erneut kontrolliert. Dabei umfasst die Einheit 9 ebenfalls wie die Einheit 6 eine Kamera zur Bewertung des Druckbilds. Ebenso erfolgt eine Korrelation des Direktdrucks 2 mit der reliefartigen Oberflächenkontur 3.

In Fig. 3 ist auch zu erkennen, dass die Inspektionsvorrichtung die Erkennungseinheit 4 für reliefartige Oberflächenkonturen 3, die erste Inspektionseinheit 6 und die zweite Inspektionseinheit 9 umfasst und diese getrennt voneinander angeordnet sein können. Die Inspektionsvorrichtung kann mehrere Erkennungseinheiten 4 für reliefartige Oberflächenkonturen 3 und mehrere Inspektionseinheiten 6, 9 umfassen. Diese können sowohl vor als auch nach der Druckvorrichtung angeordnet sein.

In Fig. 4 ist eine weitere, erfindungsgemäße Ausführungsform einer Vorrichtung zur Kontrolle bzw. Korrektur eines Direktdrucks 2 auf Behältern 1 mit einer reliefartigen Oberflächenkontur 3 in einer Draufsicht dargestellt. Dabei unterscheidet sich die in Fig. 4 dargestellte Vorrichtung von derjenigen in Fig. 3 dadurch, dass zwischen den jeweiligen Druckköpfen $5_C$, $5_M$, $5_Y$, $5_S$, $5_W$ eine Kontrolle mit den Inspektionseinheiten $6_C$, $6_M$, $6_Y$, $6_S$ erfolgt. Ein erstes Druckergebnis aller Farben wird mit der Inspektionseinheit $6_W$ kontrolliert.

Bei der in Fig. 4 dargestellten Vorrichtung wird mit den Inspektionseinheiten $6_C$, $6_M$, $6_Y$, $6_S$, $6_W$ unmittelbar nach dem Bedrucken jeder einzelnen Farbe ein Bild des Direktdrucks 2 aufgenommen. Jedes Kamerabild wird hinsichtlich der Qualität und der Lage jeder einzelnen Farbe des Direktdrucks 2 auf der reliefartigen Oberflächenkontur 3 ausgewertet.

Somit ist es möglich, nach der Bedruckung jeder Druckfarbe mit Hilfe von Entscheidungskriterien zu bewerten, ob der Behälter 1 zur Bedruckung von weiteren Farben freigegeben wird, ob gegebenenfalls ein Korrekturdruck mit der Korrekturdruckvorrichtung 7 erfolgen muss oder ob der Behälter am Auswurf 15 einem Ausschuss zugeführt wird. Bei dieser Verfahrensweise kann somit Druckfarbe eingespart werden.

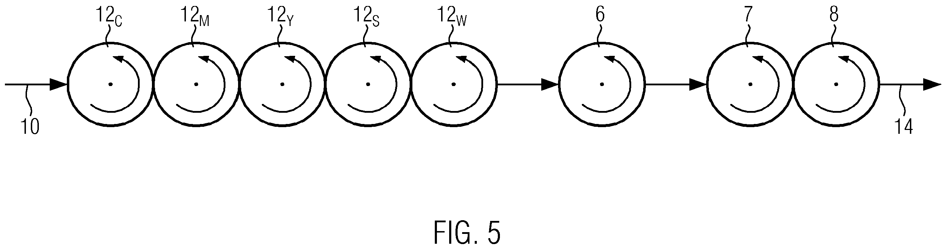

In Fig. 5 ist eine weitere, erfindungsgemäße Ausführungsform einer Vorrichtung zur Kontrolle bzw. Korrektur eines Direktdrucks 2 auf Behältern 1 mit einer reliefartigen Oberflächenkontur 3 in einer Draufsicht dargestellt. Hierbei unterscheidet sich die Vorrichtung in Fig. 5 zu derjenigen in Fig. 3 dadurch, dass die Druckköpfe für die unterschiedlichen Farben jeweils in getrennten Karussells $12_C$, $12_M$, $12_Y$, $12_S$, $12_W$ angeordnet sind, und zusätzlich die Inspektionsvorrichtung 6, die Korrekturdruckvorrichtung 7 und die Aushärtevorrichtung 8 in getrennten Karussells angeordnet sind.

Dabei werden zunächst die Behälter 1 (hier nicht dargestellt) über eine Zuführung 10 dem ersten Druckkarussell $12_C$ zugeführt und mit der Farbe Cyan bedruckt. In den weiteren Karussells $12_M$, $12_Y$, $12_S$, $12_W$ werden die Behälter 1 anschließend mit den Farben Magenta, Gelb, Schwarz und Weiß bedruckt. In der Inspektionsvorrichtung 6 werden die Behälter ebenfalls in einem Karussell an einer Laser-Triangulationseinheit vorbeigeführt, mit der die reliefartige Oberflächenkontur 3 als 3D-Koordinaten vermessen wird. Zusätzlich ist darin eine Kamera eingebaut, mit der die Bedruckungsmerkmale des Direktdrucks 2 erfasst werden können. Diese werden anschließend mit den 3D-Koordinaten der reliefartigen Oberflächenkontur 3 so korreliert, dass der Direktdruck 2 hinsichtlich seiner Qualität und Lage auf der 3D-Oberflächenkontur 3 bewertet werden kann. Anschließend wird der Behälter 1 gegebenenfalls mit einem Korrekturdruck in der als Karussell ausgebildeten Korrekturdruckvorrichtung 7 versehen. In dem nachfolgenden Karussell 8 werden die Farben mit UV-Licht ausgehärtet.

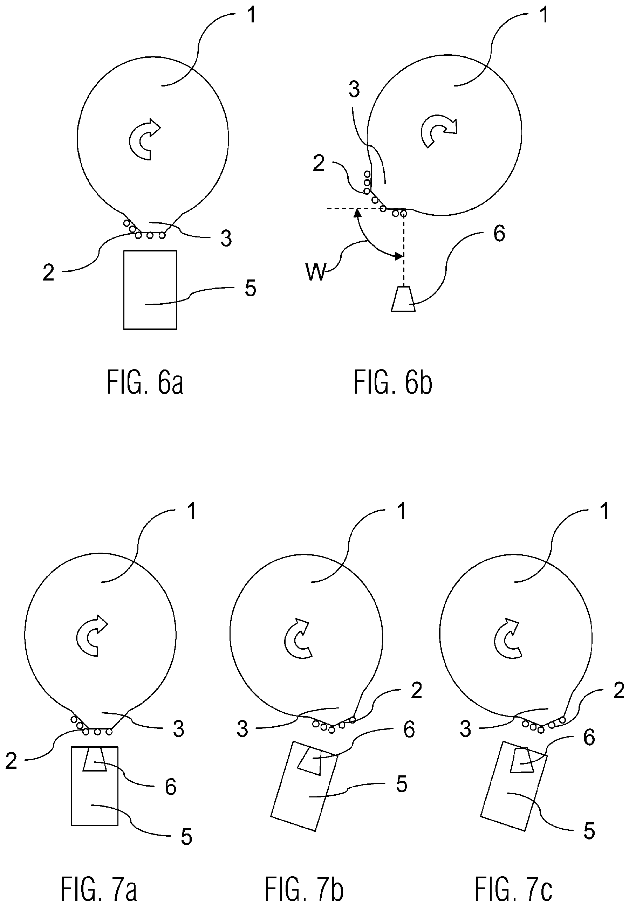

Fig. 6a - 6b zeigen eine Darstellung der Orientierung der (feststehenden) Druckvorrichtung 5 und der Inspektionsvorrichtung 6 gegenüber dem Behälter 1 in einer Draufsicht. Zu sehen ist in Fig. 6a ein Behälter 1 in einer Draufsicht, der eine reliefartige Oberflächenkontur 3 aufweist. Hierbei ist die Direktdruckvorrichtung 5 drehfest gegenüber dem Behälter 1 angeordnet. Der Behälter wird dann beim Drehen im Uhrzeigersinn mit dem Direktdruck 2 versehen. Würde die Taktfrequenz des Farbausstoßes der Farbpunkte 2 und die Drehgeschwindigkeit des Behälters 1 über den Umfang des Behälters 1 konstant bleiben, würde die Auflösung auf der Oberflächenstruktur 3 anders sein als die Auflösung auf dem Rest des Umfangs. Deswegen muss der Behälter mit einem bestimmten Dreh-Zeit-Profil relativ zur Druckvorrichtung gedreht werden. Anschließend wird der Behälter 1 mit einer Drehung vor der Inspektionsvorrichtung 6 vorbeigeführt, um die Lage und die Qualität des Direktdrucks 2 auf der reliefartigen Oberflächenstruktur 3 zu kontrollieren. Dabei ist in Fig. 6b zu erkennen, dass sich der Direktdruck 2 durch die Drehung des Behälters 1 in einer möglichst senkrechten Position vor der Inspektionsvorrichtung 6 befindet. Der Blickwinkel W der Inspektionsvorrichtung 6 sollte dabei auf den jeweiligen Bereich der Oberflächenkontur 3 möglichst 90° betragen.

Fig. 7a - 7c zeigt Darstellungen von weiteren Orientierungen der Direktdruckvorrichtung 5 und der Inspektionsvorrichtung 6 gegenüber dem Behälter 1 in einer Draufsicht. Hierbei ist zu sehen, dass durch eine Schwenkung der Druckvorrichtung 5 und/oder der Inspektionsvorrichtung 6 ein besseres Druck- oder Inspektionsergebnis erzielt werden kann.

In Fig. 7a sind die Druckvorrichtung 5 und die Inspektionsvorrichtung 6 gegenüber dem Behälter lagefest angeordnet. Dadurch können einzelne Bereiche der Oberflächenkontur 3 lediglich aus einem schrägen Winkel bedruckt werden. Ebenso erfolgt die Kontrolle durch die Inspektionsvorrichtung 6 in ungünstigen Bereichen der Oberflächenkontur 3 aus einem schrägen Winkel. Dies kann dadurch verbessert werden, dass, wie in Fig. 7b dargestellt, die Direktdruckvorrichtung 5 und die Inspektionsvorrichtung 6 schwenkbar angeordnet sind. Dabei wird durch das senkrechte Auftreffen der Druckfarbe auf der reliefartigen Oberflächenkontur 3 ein besseres Druckergebnis erzielt. Ebenso kann in Bereichen mit steilen Flanken der Oberflächenkontur 3 ein besseres Inspektionsergebnis erzielt werden.

Des Weiteren kann, wie in Fig. 7c dargestellt, lediglich die Druckvorrichtung 5 schwenkbar angeordnet sein und die Inspektionsvorrichtung 6 feststehend. Dabei kann sich eine kostengünstigere Ausführung der Inspektionsvorrichtung ergeben. Ebenso kann die Druckvorrichtung 5 feststehend angeordnet sein und die Inspektionsvorrichtung 6 schwenkbar.

Bei dem Druckkopf 5 gemäß den Figuren 7a - 7c kann es sich auch um eine Korrekturdruckvorrichtung 7 handeln.

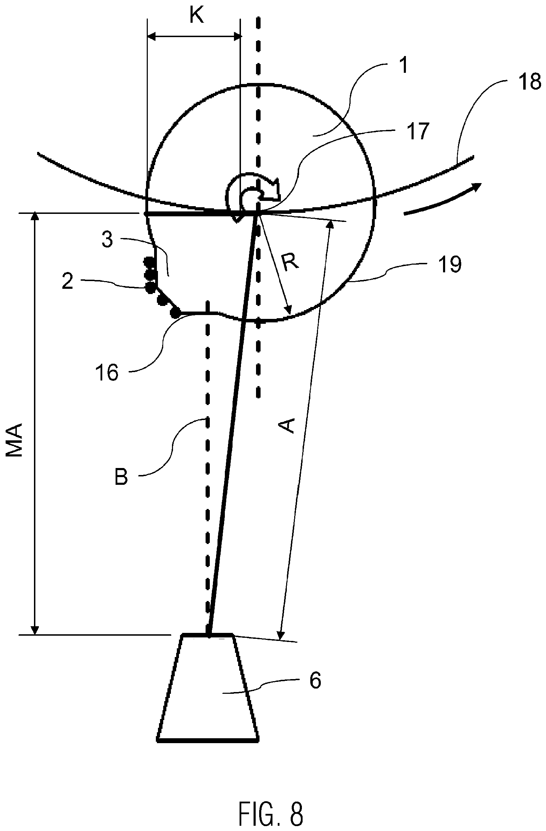

Fig. 8 zeigt eine Darstellung der Orientierung der Inspektionsvorrichtung 6 in Bezug auf die reliefartige Oberflächenkontur 3 in einer Draufsicht. Zu sehen ist ein Behälter 1, welcher sich entlang eines Transportpfades 18 an der Inspektionsvorrichtung 6 vorbeibewegt.

Hierbei wird der Behälter 1 durch eine Drehung um seine eigene Achse so orientiert, dass die Teilfläche 16 der reliefartigen Oberflächenkontur 3 im Moment der Kontrolle senkrecht zur Inspektionsachse B ausgerichtet ist. Die Teilfläche 16 hat eine Tangente, die schräg zur Behältergrundform 19 verläuft. Mit dieser Ausrichtung der Inspektionsachse B auf die Teilfläche 16 lässt sich ein zuverlässigeres Inspektionsergebnis für diesen Bereich erzielen. Dabei kann der Behälter 1 für verschiedene Teilflächen 16 während des Inspektionsvorgangs unterschiedlich ausgerichtet werden.

Die Kontrolle erfolgt somit in einem Moment, bei dem die Inspektionsachse den Kontrollbereich K schneidet. Anders ausgedrückt, ist der Abstand A zwischen dem Behältermittelpunkt 17 und der Inspektionsvorrichtung 6 während der Kontrolle in einem Bereich von

$$\sqrt{\left(\frac{R}{4}\right)^2 + MA^2} \le A \le \sqrt{R^2 + MA^2}\,.$$

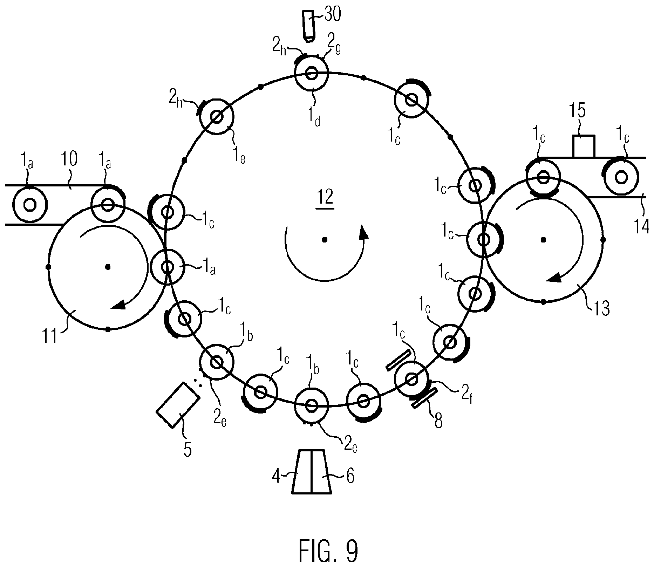

In Fig. 9 zeigt eine Darstellung einer erfindungsgemäßen Vorrichtung zur Kontrolle bzw. Korrektur eines Direktdrucks 2 auf Behältern 1 mit reliefartiger Oberflächenkontur 3 in einer Draufsicht. Zu sehen ist eine Vorrichtung, bei der die Behälter in einem Karussell 12 mit der Direktdruckvorrichtung 5 bedruckt und mit der Inspektionsvorrichtung 4, 6 kontrolliert werden. Bei der Vorrichtung können zumindest Teilbereiche des Direktdrucks 2g, 2h von einem Behälter 1d mit einer UV-Lampe 8 ausgehärtet bzw. alternativ mit einer Vorrichtung zum Entfernen von Druckfarbe 30 entfernt werden. Anschließend wird der Direktdruck mit unzureichender Druckqualität 2h auf dem Behälter 1e von der Direktdruckvorrichtung 5 im selben Karussell 12 erneut bedruckt, von der Inspektionsvorrichtung 4, 6 erneut kontrolliert und von der UV-Lampe 8 ausgehärtet. Anschließend werden die korrekt bedruckten Behälter 1c über einen Umlenkstern weiteren Verarbeitungsstationen (hier nicht dargestellt) zugeführt.

Zunächst werden die Behälter 1a nach dem Umlenkstern 11 im Karussell 12 von Haltevorrichtungen (hier nicht dargestellt) lagefest aufgenommen. Hierbei wird von dem Umlenkstern 11 nur jede zweite Haltevorrichtung des Karussells 12 mit einem Behälter 1a besetzt, wobei das Karussell eine ungerade Anzahl an Haltevorrichtungen umfasst.

In der Druckvorrichtung 5 werden mit Druckköpfen die Farben Cyan, Magenta, Gelb, Schwarz und Weiß als Direktdruck 2e auf die Behälter 1b aufgebracht. Der Direktdruck 2e ist dabei noch nicht ausgehärtet und somit vom Behälter zunächst noch ablösbar. Die Druckvorrichtung 5 basiert dabei auf dem Tintenstrahlprinzip.

Die Behälter 1a werden anschließend an einer Erkennungseinheit 4 für reliefartige Oberflächenkonturen 3 vorbeigeführt. Hierbei befindet sich innerhalb der Erkennungseinheit 4 ein Leuchtschirm mit streifenartigen Strukturen, die längs der Behälterachse orientiert sind. Das Lichtmuster spiegelt sich dabei über einen Lichtreflex an der Behälteroberfläche und wird von einer Kamera aufgenommen. In dem Kamerabild sind somit der Behälter 1b und der Lichtreflex mit einem entsprechend verzerrten Streifenmuster sichtbar. Das Streifenmuster wird dabei einerseits von der zylindrischen Grundform der Behälteroberfläche verzerrt und andererseits von der reliefartigen Oberflächenkontur 3. Insbesondere ist das reflektierte Lichtmuster an den Flanken der reliefartigen Oberflächenkontur 3 besonders stark verzerrt. Mit der Erkennungseinheit 4 kann somit die genaue Lage des Behälters 1b bezüglich der Haltevorrichtung ermittelt werden und zusätzlich Fehler in der reliefartigen Oberflächenkontur 3.

Anschließend wird der nicht-ausgehärtete Direktdruck 2e mit der Inspektionsvorrichtung 6 kontrolliert. Die Inspektionsvorrichtung umfasst eine Kamera 6, mit der ein Farbbild des Direktdrucks 2e nach dem Druckvorgang aufgenommen wird. Durch eine Korrelation werden die Konturmerkmale der reliefartigen Oberflächenkontur 3 mit dem Farbbild des nicht-ausgehärteten Direktdrucks 2e überlagert. Somit ist eine genaue Analyse der Bedruckungsmerkmale des Direktdrucks 2e in Bezug auf die reliefartige Oberflächenkontur 3 möglich. Hierbei werden entsprechende Schwellwerte dazu benutzt, um die Qualität und/oder die Lage des Direktdrucks 2e auf der reliefartigen Oberflächenkontur 3 zu bewerten. Durch die Bewertung erfolgt einerseits eine Rekalibrierung der Druckparameter und andererseits eine Entscheidung, ob von dem betroffenen Behälter 1b Farbe entfernt wird und/oder ein Korrekturdruck beim zweiten Durchlauf der Direktdruckvorrichtung 5 erfolgt, oder ob dieser im späteren Verlauf am Auswurf 15 ausgeworfen wird.

Im weiteren Verlauf des Karussells 12 werden die Farben mit einer UV-Lampe 8 ausgehärtet, falls die Qualität und die Lage des Direktdrucks 2e dem Qualitätsstandard entspricht. Dabei ist die UV-Lampe 8 so ausgebildet, dass sie den gesamten Direktdruck 2f auf einem korrekt bedruckten Behälter 1c aushärtet.

Weist ein Behälter 1d jedoch nur in einem Teilbereich einen korrekten Direktdruck 2h auf, so wird dieser Bereich ebenfalls ausgehärtet. Dies erfolgt durch die Anordnung von entsprechenden Blenden (hier nicht dargestellt) vor der UV-Lampe 8. Der nicht korrekt bedruckte Teilbereich des Direktdrucks 2g wird dabei nicht ausgehärtet und anschließend mit einer Vorrichtung 30 zum Entfernen der aufgebrachten Druckfarbe entfernt. Hierbei wird auf den fehlerhaften Direktdruck 2g ein Lösungsmittel mit Düsen aufgesprüht. Anschließend wird der Behälter 1e getrocknet (hier nicht dargestellt) und weist lediglich in einem Teilbereich einen korrekten Direktdruck 2h auf.

Beim zweiten Vorbeilauf an der Direktdruckvorrichtung 5 wird der fehlerhaft bedruckte Behälter 1e entsprechend korrekt bedruckt, mit der Inspektionsvorrichtung 4, 6 kontrolliert und mit der UV-Lampe 8 ausgehärtet.

Der Umlenkstern 13 entnimmt jeden zweiten Behälter aus dem Karussell 12, nach dem dieser zum zweiten Mal an der Direktdruckvorrichtung 5 vorbeigelaufen ist und transportiert diesen zum Auslauf 14. Es ist alternativ denkbar, dass der Umlenkstern 13 abhängig vom Druckergebnis die korrekt bedruckten Behälter 1c unmittelbar nach dem ersten Vorbeilauf aus dem Karussell entnimmt und nur diejenigen Behälter 1d, 1e an der Direktdruckvorrichtung im Karussell belässt, die nicht korrekt bedruckt worden sind. Ist der Direktdruck 2 eines Behälters 1d, 1e nicht korrigierbar, so wird er mit dem Auswerfer 15 ausgeworfen und anschließend recycelt oder entsorgt.

Die erfindungsgemäße Vorrichtung nach Fig. 9 hat den Vorteil, dass zum Aufbringen des Korrekturdrucks die gleiche Direktdruckvorrichtung 5 verwendet werden kann, wie für den eigentlichen Direktdruck 2e. Somit wird die Anlage weniger kostenaufwändig. Zusätzlich kann der Behälterausschuss bei der in Fig. 9 gezeigten Vorrichtung durch das Entfernen des nicht korrekten Direktdrucks 2g auf ein Minimum reduziert werden, was ebenfalls entsprechende Kostenvorteile mit sich bringt, da die betroffenen Behälter lediglich neu bedruckt werden und nicht recycelt.

Es versteht sich, dass in den zuvor beschriebenen Ausführungsbeispielen genannte Merkmale nicht auf diese speziellen Kombinationen beschränkt sind und in beliebigen anderen Kombinationen möglich sind.

**Patentansprüche**

1. Verfahren (20) zur Kontrolle eines Direktdrucks (2) auf Behältern (1) mit reliefartiger Oberflächenkontur (3), wobei die reliefartige Oberflächenkontur eine dreidimensionale Struktur ist, die sich gegenüber einem umgebenden Wandabschnitt durch gezielt und/oder reproduzierbar herstellbare Erhebungen und/oder Vertiefungen abzeichnet, und wobei die reliefartige Oberflächenkontur (3) mindestens teilweise bedruckt wird (24),
**dadurch gekennzeichnet, dass**

   der auf die reliefartige Oberflächenkontur (3) aufgebrachte Direktdruck (2) hinsichtlich seiner Qualität und/oder Lage mit einer Inspektionsvorrichtung (4, 6, 9) kontrolliert wird (21, 25-28), und dass Konturmerkmale der reliefartigen Oberflächenkontur (3) und Bedruckungsmerkmale des Direktdrucks (2) in der Inspektionsvorrichtung (4, 6, 9) erfasst (21, 25, 26) und korreliert (27) werden.

2. Verfahren (20) zur Kontrolle eines Direktdrucks (2) auf Behältern (1) nach Anspruch 1, wobei die Behälter (1) vor der Bedruckung (24) mit Haltevorrichtungen lagefest verbunden werden, wobei insbesondere die Konturmerkmale der reliefartigen Oberflächenkontur (3) vor der Bedruckung erfasst werden (21) und die Bedruckungsmerkmale nach der Bedruckung (25, 26) erfasst werden.

3. Verfahren (20) zur Kontrolle eines Direktdrucks (2) auf Behältern (1) nach wenigstens einem der vorangegangenen Ansprüche, wobei der Direktdruck (2) nach der Kontrolle mit einem Korrekturdruck korrigiert wird.

4. Verfahren (20) zur Kontrolle eines Direktdrucks (2) auf Behältern (1) nach wenigstens einem der vorangegangenen Ansprüche, wobei zur Kalibrierung des Direktdrucks (2) ein Korrektursignal von der Inspektionsvorrichtung (4, 6, 9) zu einer Direktdruckvorrichtung (5) übermittelt wird (28).

5. Verfahren (20) zur Kontrolle eines Direktdrucks (2) auf Behältern (1) nach wenigstens einem der vorangegangenen Ansprüche, wobei der Direktdruck (2) sequentiell durch Druckköpfe ($5_C$, $5_M$, $5_Y$, $5_S$, $5_W$) mit unterschiedlichen Druckfarben erfolgt und zwischen wenigstens zwei Druckköpfen ($5_C$, $5_M$, $5_Y$, $5_S$, $5_W$) ein Zwischenergebnis des Direktdrucks (2) kontrolliert wird und/oder nach dem Drucken aller Druckfarben das Gesamtergebnis kontrolliert wird.

6. Verfahren (20) zur Kontrolle eines Direktdrucks (2) auf Behältern (1) nach wenigstens einem der vorangegangenen Ansprüche, wobei Teilflächen (16) der reliefartigen Oberflächenkontur (3) mit einer zur Grundform (19) des Behälters (1) schrägen Tangente senkrecht auf eine Inspektionsachse (B) ausgerichtet werden.

7. Vorrichtung zur Durchführung des Verfahrens nach Anspruch 1 für die Kontrolle eines Direktdrucks (2) auf Behältern (1) mit einer reliefartiger Oberflächenkontur (3), wobei die reliefartige Oberflächenkontur eine dreidimensionale Struktur ist, die sich gegenüber einem umgebenden Wandabschnitt durch gezielt und/oder reproduzierbar herstellbare Erhebungen und/oder Vertiefungen abzeichnet, umfassend eine Direktdruckvorrichtung (5) zur mindestens teilweisen Bedruckung der reliefartigen Oberflächenkontur (3),
**dadurch gekennzeichnet, dass**
die Vorrichtung mindestens eine Inspektionsvorrichtung (4, 6, 9) zur Überprüfung des Direktdrucks (2) hinsichtlich seiner Qualität und/oder Lage aufweist, dass die Inspektionsvorrichtung (4, 6, 9) eine Erkennungseinheit (4) für reliefartige Oberflächenkonturen (3) und/oder eine Triangulationseinheit und/oder mindestens eine Kamera umfasst, wobei die Kamera dazu geeignet ist, Bedruckungsmerkmale des Direktdrucks (2) und/oder Konturmerkmale der reliefartigen Oberflächenstruktur (3) zu erkennen.

8. Vorrichtung zur Kontrolle eines Direktdrucks (2) nach Anspruch 7, wobei die Behälter (1), die Direktdruckvorrichtung (5) und/oder die Inspektionsvorrichtung (4, 6, 9) schwenkbar angeordnet ist.

9. Vorrichtung zur Kontrolle eines Direktdrucks (2) nach Anspruch 7 oder 8, wobei die Inspektionsvorrichtung (4, 6, 9) mindestens eine Schichtdickenmessvorrichtung umfasst, die insbesondere dazu geeignet ist, die Dicke mindestens einer Farbschicht zu messen.

10. Vorrichtung zur Kontrolle eines Direktdrucks (2) nach wenigstens einem der Ansprüche 7 - 9, wobei Haltevorrichtungen dazu vorgesehen sind, die Behälter (1) lagefest aufzunehmen.

**Claims**

1. Method (20) for inspecting direct printing (2) on containers (1) which comprise a relief-like surface contour (3), the relief-like surface contour is a three-dimensional structure which stands out against a surrounding wall portion by means of protrusions and/or depressions that can be selectively and/or reproducibly manufactured, and the relief-like surface contour (3) being at least partially printed (24), **characterised in that** the direct printing (2) applied to the relief-like surface contour (3) is inspected (21, 25-28) with regard to its quality and/or position by means of an inspection device (4, 6, 9), and **in that** the contour characteristics of the relief-like surface contour (3) and the print characteristics of the direct printing (2) are detected (21, 25, 26) and correlated (27) in the inspection device (4, 6, 9).

2. Method (20) for inspecting direct printing (2) on containers (1) according to claim 1, wherein the containers (1) are connected to holding devices in a positionally fixed manner before printing (24), wherein particularly the contour characteristics of the relief-like surface contour (3) are detected before printing (21) and the print characteristics are detected after printing (25, 26).

3. Method (20) for inspecting direct printing (2) on containers (1) according to at least one of the preceding claims, wherein, after inspection, the direct printing (2) is corrected by means of a correction printing.

4. Method (20) for inspecting direct printing (2) on containers (1) according to at least one of the preceding claims, wherein a correction signal is transmitted (28) to a direct printing device (5) from the inspection device (4, 6, 9) in order to calibrate the direct printing (2).

5. Method (20) for inspecting direct printing (2) on containers (1) according to at least one of the preceding claims, wherein the direct printing (2) takes place sequentially by means of printing heads ($5_C$, $5_M$, $5_Y$, $5_S$, $5_W$) using different printing inks, and between at least two printing heads ($5_C$, $5_M$, $5_Y$, $5_S$, $5_W$) an interim result of the direct printing (2) is inspected, and/or after printing all of the inks the overall result is inspected.

6. Method (20) for inspecting direct printing (2) on containers (1) according to at least one of the preceding claims, wherein partial surfaces (16) of the relief-like surface contour (3) having a tangent which is slanted with respect to the main shape (19) of the container (1) are oriented perpendicularly to an inspection axis (B).

7. Device for carrying out the method according to claim 1 for inspecting direct printing (2) on containers (1) which comprise a relief-like surface contour (3), the relief-like surface contour is a three-dimensional structure which stands out against a surrounding wall portion by means of protrusions and/or depressions which can be selectively and/or reproducibly manufactured, said device comprising a direct printing device (5) for at least partial printing of the relief-like surface contour (3), **characterised in that** the device has at least one inspection device (4, 6, 9) for checking the direct printing (2) with regard to its quality and/or position, **in that** the inspection device (4, 6, 9) comprises a recognition unit (4) for relief-like surface contours (3) and/or a triangulation unit and/or at least one camera, the camera being suitable for recognising the print characteristics of the direct printing (2) and/or contour characteristics of the relief-like surface structure (3).

8. Device for inspecting direct printing (2) according to claim 7, wherein the container (1), the direct printing device (5) and/or the inspection device (4, 6, 9) is pivotably arranged.

9. Device for inspecting direct printing (2) according to either claim 7 or claim 8, wherein the inspection device (4, 6, 9) comprises at least one layer thickness measuring device which is particularly suitable for measuring the thickness of at least one layer of colour.

10. Device for inspecting direct printing (2) according to at least one of claims 7-9, wherein holding devices are provided which accommodate the container (1) in a positionally fixed manner.

## Revendications

1. Procédé (20) destiné à contrôler une impression directe (2) sur des contenants (1) présentant un contour de surface (3) du type en relief, le contour de surface du type en relief étant une structure à trois dimensions, qui se distingue par rapport à un tronçon de paroi l'entourant, par des proéminences et/ou des creux pouvant être réalisés de manière ciblée et/ou reproductible, et le contour de surface (3) du type en relief étant prévu pour être imprimé (24) au moins partiellement,
**caractérisé**

    **en ce que** l'impression directe (2) ayant été appliquée sur le contour de surface (3) du type en relief est contrôlée (21, 25-28) quant à sa qualité et/ou sa position, à l'aide d'un dispositif d'inspection (4, 6, 9), et
    **en ce que** des caractéristiques de contour du contour de surface (3) du type en relief et des caractéristiques d'impression de l'impression directe (2) sont relevées (21, 25, 26) et corrélées (27) dans le dispositif d'inspection (4, 6, 9).

2. Procédé (20) destiné à contrôler une impression directe (2) sur des contenants (1), selon la revendication 1, d'après lequel les contenants (1) sont reliés en position fixe à l'aide de dispositifs de maintien avant l'impression (24), et notamment d'après lequel les caractéristiques de contour du contour de surface (3) du type en relief sont relevées (21) avant l'impression, et les caractéristiques d'impression sont relevées (25, 26) après l'impression.

3. Procédé (20) destiné à contrôler une impression directe (2) sur des contenants (1), selon l'une au moins des revendications précédentes, d'après lequel l'impression directe (2) est corrigée après le contrôle, à l'aide d'une impression de correction.

4. Procédé (20) destiné à contrôler une impression directe (2) sur des contenants (1), selon l'une au moins des revendications précédentes, d'après lequel pour le calibrage de l'impression directe (2), un signal de correction est transmis (28) du dispositif d'inspection (4, 6, 9) à un dispositif d'impression directe (5).

5. Procédé (20) destiné à contrôler une impression directe (2) sur des contenants (1), selon l'une au moins des revendications précédentes, d'après lequel l'impression directe (2) est effectuée de manière séquentielle par des têtes d'impression ($5_C$, $5_M$, $5_Y$, $5_S$, $5_W$) avec des encres d'impression différentes, et un résultat intermédiaire de l'impression directe (2) est contrôlé entre au moins deux têtes d'impression ($5_C$, $5_M$, $5_Y$, $5_S$, $5_W$), et/ou le résultat global est contrôlé après l'impression de toutes les encres d'impression.

6. Procédé (20) destiné à contrôler une impression directe (2) sur des contenants (1), selon l'une au moins des revendications précédentes, d'après lequel on oriente des surfaces partielles (16) du contour de surface (3) du type en relief avec une tangente inclinée par rapport à la forme de base (19) du contenant (1), perpendiculairement à un axe d'inspection (B).

7. Dispositif pour la mise en œuvre du procédé selon la revendication 1, pour le contrôle d'une impression directe (2) sur des contenants (1) présentant un contour de surface (3) du type en relief, le contour de surface du type en relief étant une structure à trois dimensions, qui se distingue par rapport à un tronçon de paroi l'entourant, par des proéminences et/ou des creux pouvant être réalisés de manière ciblée et/ou reproductible, le dispositif comprenant un dispositif d'impression directe (5) pour assurer l'impression au moins partielle du contour de surface (3) du type en relief,
**caractérisé**

    **en ce que** le dispositif comprend au moins un dispositif d'inspection (4, 6, 9) pour la vérification de l'impression directe (2) quant à sa qualité et/ou sa position,
et **en ce que** le dispositif d'inspection (4, 6, 9) comprend une unité de reconnaissance (4) pour des contours de surface (3) du type en relief et/ou une unité de triangulation et/ou au moins une caméra, la caméra étant adaptée à la reconnaissance de caractéristiques d'impression de l'impression directe (2) et/ou de caractéristiques de contour de la structure de surface (3) du type en relief.

8. Dispositif pour le contrôle d'une impression directe (2) selon la revendication 7, dans lequel les contenants (1), le dispositif d'impression directe (5) et/ou le dispositif d'inspection (4, 6, 9) sont agencés de manière pivotante.

9. Dispositif pour le contrôle d'une impression directe (2) selon la revendication 7 ou la revendication 8, dans lequel le dispositif d'inspection (4, 6, 9) comprend au moins un dispositif de mesure d'épaisseur de couche, qui est notamment adapté à mesurer l'épaisseur d'au moins une couche d'encre.

10. Dispositif pour le contrôle d'une impression directe (2) selon l'une au moins des revendications 7 - 9, dans lequel des dispositifs de maintien sont prévus pour recevoir en position fixe, les contenants (1).

FIG. 1

FIG. 2

FIG. 3

FIG. 4

FIG. 5

FIG. 6a

FIG. 6b

FIG. 7a

FIG. 7b

FIG. 7c

FIG. 8

FIG. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 03002349 A2
- WO 2010034375 A1
- WO 03106177 A
- US 20090205516 A1
- US 2010281833 A1
- JP 2008089379 A
- US 20110132916 A1
- JP 2010126210 A